# EUROPEAN PATENT SPECIFICATION

(11) **EP 3 342 663 B1**
(45) Date of publication and mention of the grant of the patent: **06.07.2022**
(21) Application number: 17205453.8
(22) Date of filing: 05.12.2017
(51) Int. Cl.: B60W 30/09, B60W 30/095, B60W 50/14

(54) **METHOD AND APPARATUS FOR PEDESTRIAN COLLISION MITIGATION**
VERFAHREN UND VORRICHTUNG ZUR FUSSGÄNGERKOLLISIONSABSCHWÄCHUNG
PROCÉDÉ ET APPAREIL D'ATTÉNUATION DE COLLISION DE PIÉTONS

(30) Priority: 30.12.2016 KR 20160184303
(43) Date of publication of application: 04.07.2018
(73) Proprietor: Hyundai Motor Company, Seoul 06797 (KR); Kia Corporation, Seocho-gu Seoul 06797 (KR)
(72) Inventor: KIM, Yoon Soo, Suwon-si, Gyeonggi-do 16516 (KR); PARK, Seung Wook, Yongin-si, Gyeonggi-do 16854 (KR); LEE, Min Byeong, Seongnam-si, Gyeonggi-do 13586 (KR); KIM, Woo Sung, Yongin-si, Gyeonggi-do 16822 (KR); JUNG, In Yong, Suwon-si, Gyeonggi-do 16514 (KR)
(74) Representative: Viering, Jentschura & Partner mbB Patent- und Rechtsanwälte

(56) References cited:
- DE-A1-102010 053 350
- DE-A1-102011 112 985
- US-A1- 2007 032 952
- US-A1- 2011 153 166
- US-A1- 2012 330 541
- US-A1- 2014 343 749
- US-A1- 2016 272 172

## Description

### TECHNICAL FIELD

Exemplary embodiments of the present invention relate to a method and an apparatus for operating pedestrian detection and collision mitigation systems (PDCMS) of a vehicle, and more particularly, to an apparatus and a method for activating a PDCMS of a vehicle capable of protecting a pedestrian by recognizing the pedestrian using an image pedestrian detection and operating a PDCMS function in case of accidents.

### BACKGROUND

Recently, an advanced driver assistance system (ADAS) is being developed to assist driving of a driver. The ADAS has multiple sub-technology categories. Among all, the ADAS includes a pedestrian detection and collision mitigation system (PDCMS).

The PDCMS is a technology that warns a driver of a potential pedestrian collision when a collision of a pedestrian with a vehicle is expected and automatically activates an emergency brake. For example, DE 10 2011 112985 A1 discloses a method and system for operating a safety device, in which a stepwise activation of safety measures depending on a determined criticality of detected driving conditions, such as collision probability with a pedestrian, is performed, wherein a warning to a driver of a vehicle is outputted during presence of a collision probability and motor torque of a drive unit of the vehicle is automatically reduced. Further, US 2014/343749 A1 also discloses a collision mitigation apparatus.

Considering high lethality and injury rates of pedestrian-related traffic accidents, which can lead to loss a number of lives, the PDCMS system may help reduce a speed of the vehicle against inevitable pedestrian collisions, thereby alleviating pedestrian impacts and reducing the lethality and the injury rates.

Therefore, a technology development for specific application of the PDCMS has been required.

### SUMMARY

An object of the present invention is to a system for protecting a pedestrian by detecting the pedestrian using an image pedestrian detection and activating a PDCMS function using speed information on a vehicle and information on a motion or a distance of the pedestrian with respect to the vehicle.

Other objects and advantages of the present invention can be understood by the following description, and become apparent with reference to the embodiments of the present disclosure. Also, it is obvious to those skilled in the art to which the present invention
pertains that the objects and advantages of the present disclosure can be realized by the means as claimed and combinations thereof.

To this end, the present invention provides an apparatus for operating a pedestrian detection and collision mitigation system (PDCMS) of a vehicle according to claim 1 and a method for activating a pedestrian detection and collision mitigation system (PDCMS) of a vehicle according to claim 10. Further advantageous embodiments are described in the dependent claims.

### BRIEF DESCRIPTION OF THE DRAWINGS

The above and other objects, features and other advantages of the present invention
will be more clearly understood from the following detailed description taken in conjunction with the accompanying drawings, in which:
FIG. 1 is a diagram illustrating a schematic concept of a PDCMS;
FIG. 2 is a block diagram illustrating a change in a PDCMS state according to a vehicle;
FIG. 3 is a block diagram schematically illustrating an apparatus for activating a PDCMS of a vehicle according to an embodiment of the present invention; ;
FIG. 4 is a diagram illustrating an example of pedestrian recognition within a driving lane according to an embodiment of the present invention
FIG. 5 is a diagram illustrating a concept of a pedestrian moving speed;
FIG. 6 is a diagram illustrating an example of a mapping table for operating the PDCMS function according to the embodiment of the present invention;
FIG. 7 is a diagram illustrating an example not covered by the claims of the mapping table for operating the PDCMS function; and
FIG. 8 is a flow chart illustrating a flow of a method for activating a PDCMS function according to an embodiment of the present invention.

### DETAILED DESCRIPTION

Hereinafter, exemplary embodiments of the present invention will be described in detail with reference to the accompanying drawings so that those skilled in the art may easily practice the present invention.

A part irrelevant to the description will be omitted to clearly describe the present invention , and the same elements will be designated by the same reference numerals throughout the specification.

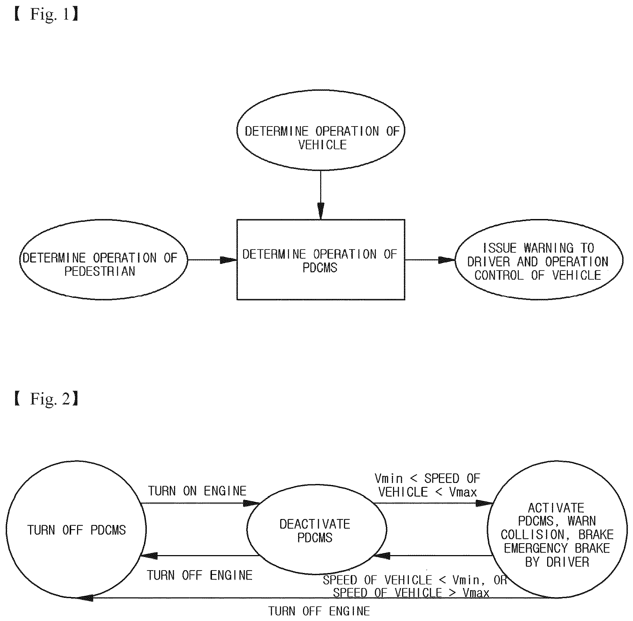

FIG. 1 is a diagram illustrating a schematic concept of a PDCMS.

The PDCMS is a technology that warns a driver of a pedestrian collision when a collision of a pedestrian with a vehicle is expected and automatically activates an emergency brake.

Referring to FIG. 1, it is determined whether the PDCMS is operated based on an operation determination of a pedestrian and an operation determination of a vehicle. When the operation of the PDCMS is determined, the PDCMS function is performed by issuing a warning to driver and activating a vehicle control.

A system designer may design the PDCMS function to operate solely in the risk of collision of a pedestrian with a vehicle or may design the PDCMS function to operate in a combination with other driving assistance systems.

FIG. 2 is a block diagram illustrating a change in a PDCMS state according to a vehicle.

In a PDCMS off state, no action is taken on the operation of the vehicle. The PDCMS off state occurs when an engine of a vehicle stalls.

In the PDCMS deactivation state, the apparatus for activating a PDCMS monitors a speed of a vehicle and determine whether the PDCMS is in an appropriate state to activate. The PDCMS deactivation state is achieved by turning on the engine in the PDCMS off state. Further, the PDCMS deactivation state is performed even when the vehicle is in a state other than the conditions that the vehicle is activated from the PDCMS activation state. For example, when the speed of the vehicle falls below a predetermined value Vmin, the PDCMS deactivation state is established.

The PDCMS activation state is established when the speed of the vehicle is equal to or greater than the predetermined value Vmin and equal to or less than a predetermined value Vmax. To determine whether to operate the PDCMS function in the PDCMS activation state, an operation of a pedestrian and an operation of a vehicle are monitored. When the apparatus for activating a PDCMS determines that the PDCMS function needs to be operated, the PDCMS function starts. The PDCMS function includes a collision warning to a driver and an operation of an emergency brake or optionally includes braking actions by a driver.

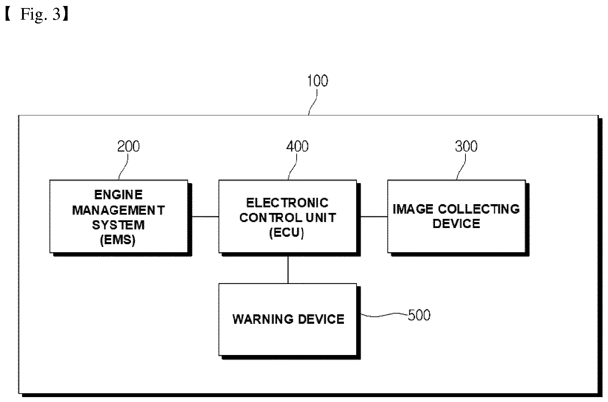

FIG. 3 is a block diagram schematically illustrating an apparatus for activating a PDCMS of a vehicle according to an embodiment of the present disclosure.

Referring to FIG. 3, an apparatus 100 for activating a PDCMS of a vehicle according to an embodiment of the present disclosure includes an image collecting device 300, an engine management system (EMS) 200, an electronic control unit (ECU) 400, and a determination module 410.

The EMS 200, which may be a sensor system or the like, measures revolutions per minute (RPM) of a vehicle wheel based on a vehicle engine and calculates a driving speed of a vehicle based on the known circumference of the wheel and the measured RPM and time. Further, the EMS 200 may ascertain whether a brake pedal is operated. The EMS 200 transmits information on the calculated driving speed and whether a brake pedal is operated to the ECU 400.

The image collecting device 300 is operated by the control of the ECU 400. The ECU 400 controls the image collecting device 300 when the speed of the vehicle received from the EMS 200 is equal to or greater than a set first speed.

The image collecting device 300 may be a camera or the like, and configured to look forward to collect images in front of the vehicle, but is not configured only to look at the front of the vehicle. The image collecting device 300 may extract characteristics of obstacles detected in front of the vehicle to identify objects and detect various objects such as vehicles on a roadside as well as pedestrians. The image collecting device 300 may detect even parts configuring a pedestrian as well as the overall appearance of the pedestrian to detect the pedestrian even when only a part of the pedestrian covered by various objects such as vehicles on a roadside is detected. The image collecting device 300 transmits information on the detected pedestrian to an ECU 400.

The ECU 400 determines whether to operate the PDCMS function of the vehicle based on the information received from the image collecting device 300 and the EMS 200. Specifically, the ECU 400 determines whether the conditions for operating the PDCMS function are satisfied by combining the pedestrian state and the vehicle state. That is, the ECU 400 determines the risk of collision between a vehicle and a pedestrian using a current position of the pedestrian, a current position of the vehicle, and speed information on the vehicle if it is determined that an obstacle is the pedestrian. For example, when the distance between the pedestrian and the vehicle is below a predetermined distance and a motion direction of the pedestrian and a movement direction of the vehicle are the same, the collision is highly likely to occur, and therefore it is determined that the conditions that the PDCMS function may be operated are satisfied and when the distance between the pedestrian and the vehicle is below the predetermined distance but the motion direction of the pedestrian and the movement direction of the vehicle are different, the collision is less likely to occur, and therefore it is determined that the conditions that the PDCMS function may be operated are not satisfied.

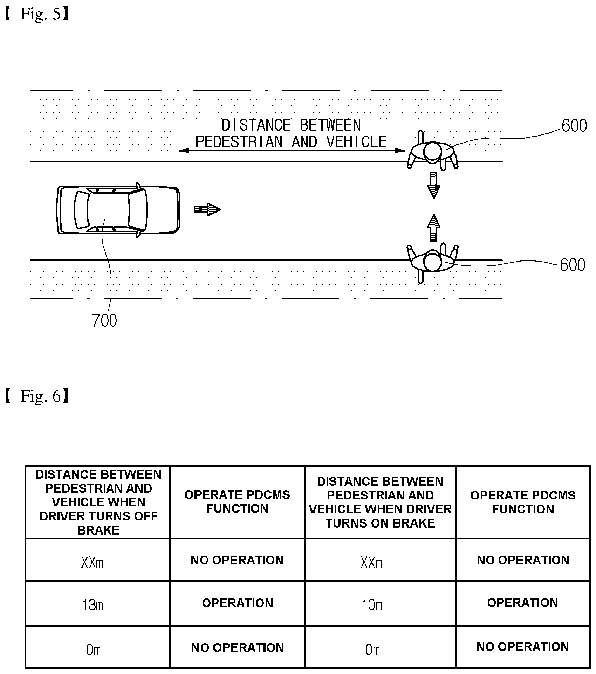

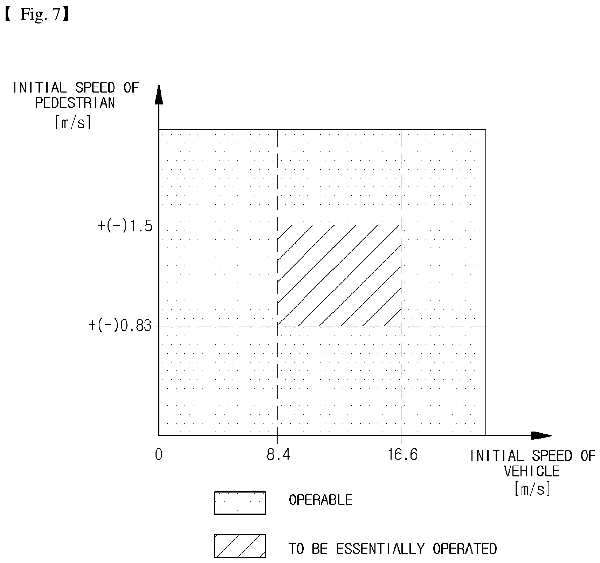

The ECU 400 determines whether the conditions that the PDCMS function may be operated are satisfied based on the mapping table. The mapping table will be described below with reference to FIGS. 6 and 7.

The ECU 400 operates the PDCMS function of the vehicle if the ECU 400 is determined that the pedestrian state and the vehicle state satisfy the conditions that the PDCMS function may start. The PDCMS function includes operating an active hood, operating the warning device 500 to warn the driver of the collision of the pedestrian with the vehicle, or operating the brake without the operation of the driver.

The active hood is used to lift up a bonnet on the front of the vehicle to mitigate the impact on a pedestrian's hood (head). In addition, to protect the pedestrian's head while operating the active hood, a pedestrian protection airbag for protecting a pedestrian may be provided at positions such as a lower portion of a front glass and an upper portion of an A pillar and a hood.

Warning the driver of the collision of the pedestrian with the vehicle is performed by operating the warning device 500. The warning device 500 is operated by the control of the ECU 400. The warning device 500 may include a display or a speaker. The display included in the warning device 500 may provide a driver with a visual warning through a head-up display, a navigation display, etc. The speaker included in the warning device 500 may provide a driver with an audible warning through an audio. The content of the warning that the warning device 500 performs is that there is a potential risk of collision of the pedestrian with the vehicle since obstacles exist in the front of a driving lane of the vehicle.

The activation of the operation of the brake regardless of whether the driver operates the brake is performed only by the control of the ECU 400 without the operation of the driver. The activation of the operation of the brake is to automatically reduce the relative speed between the vehicle and the pedestrian if it is found that the pedestrian collision is just around the corner.

The operation of the PDCMS function is performed so that the speed of the vehicle may be reduced to at least a predetermined speed or more from the time when the operation of the brake is activated to the time when the collision of the pedestrian with the vehicle occurs. Preferably, the predetermined speed may be 20 km/h.

Further, even after the activation of the operation of the brake starts, the driver manually operates the brake, thereby performing the maximum possible deceleration. That is, the driver may manually operate the brake so that the speed of the vehicle is reduced more than the predetermined speed. For example, the driver may manually operate the brake so that the speed of the vehicle is reduced more than 20 km / h which is the predetermined speed.

In addition, the ECU 400 may inform a driver that the PDCMS function is in an available state. Specifically, the ECU 400 may inform the driver that the PDCMS function is in the available state through the head-up display, the navigation display, or the audio that is used to warn the driver of the collision of the pedestrian with the vehicle.

In addition, the PDCMS function may control an operation of a brake lamp to prevent the potential risk of collision with the following vehicles.

In addition, the PDCMS function may further include an operation of an electrical stability control (ESC). The ESC is an apparatus that allows a vehicle itself to intervene in an operation of a brake in an emergency situation such as an oversteer (when a vehicle enters inwardly beyond a turning radius of a road) or an understeer (when a vehicle deviates outwardly beyond the turning radius of the road) of a vehicle to thereby help a driver to escape from an emergency situation.

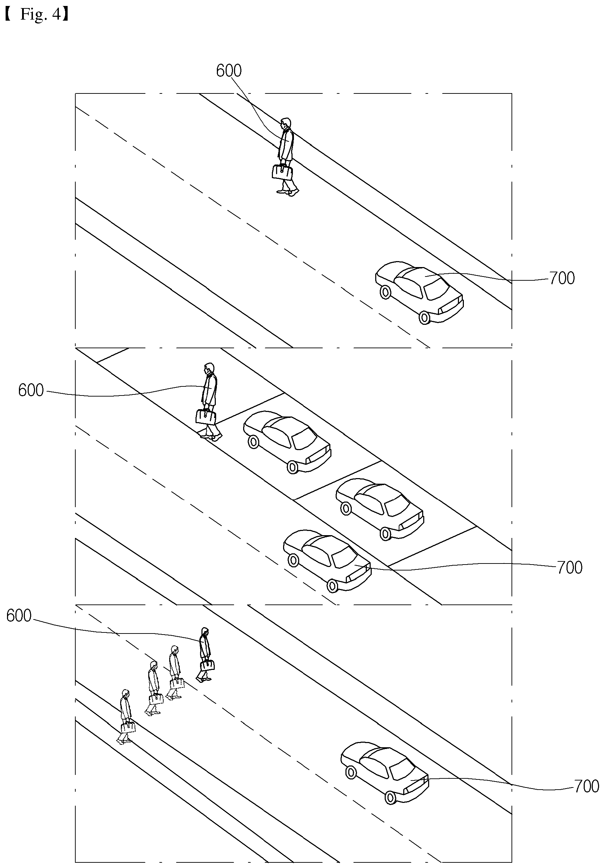

FIG. 4 is a diagram illustrating an example of pedestrian recognition within a driving lane according to an embodiment of the present disclosure.

Referring to FIG. 4, the image collecting device 300 may detect a pattern of a pedestrian including a shape, a position, and a direction of a pedestrian, angles of arms and legs of a pedestrian, and the like.

The image collecting device 300 extracts a lane area by applying a horizontal distance calculation based algorithm to obtain information on a lane while the vehicle is driving. The image collecting device 300 starts to scan a lane nearest to the vehicle and collects the presence or absence of a pedestrian who is moving within a driving lane of the vehicle.

For example, when a pedestrian 600 is positioned at a center of a crosswalk within a driving lane, the pedestrian 600 moves toward a vehicle 700, or the angles of the arms and legs of the pedestrian 600 is within a set angle (15° to 30°), it may be determined that the pedestrian is a pedestrian who is moving within the driving lane. On the other hand, when the pedestrian 600 moves in the opposite direction to the vehicle 700 or the angles of the arms and legs of the pedestrian 600 are smaller than the set angle, for example, 0° to 10°, it may be determined that the pedestrian is not a pedestrian who is moving within the driving lane.

FIG. 5 is a diagram illustrating a concept of a pedestrian moving speed.

Referring to FIG. 5, the image collecting device 300 may detect the distance between the pedestrian 600 and the vehicle 700 that are moving within a driving lane and the moving speed of the pedestrian 600.

For example, if the pedestrian 600 moves from the left to the right with respect to a front view of the vehicle 700, the pedestrian 600 has a negative (-) moving speed and if the pedestrian 600 moves from the right to left with respect to the front view of the vehicle 700, the pedestrian 600 has a positive (+) moving speed.

In addition, the image collecting device 300 detects the distance between the vehicle 700 and the pedestrian 600 that are moving on the driving lane of the vehicle based on the collected image in front of the vehicle.

FIG. 6 is a diagram illustrating an example of a mapping table for operating the PDCMS function according to the embodiment of the present disclosure.

The determination module 410 is an electric circuitry that is implemented in the ECU 400, and uses the mapping table to determine the risk of collision of the pedestrian with the vehicle, and furthermore, whether the PDCMS function is operated.

Referring to FIG. 6, the PDCMS function is operated depending on whether the brake is operated, compared with the distance between the pedestrian and the vehicle.

Specifically, the distance for determining the activation of the PDCMS function is longer when the brake is not yet operated than when the brake is already operated. Because the PDCMS reduces the speed of the vehicle by at least a predetermined speed, the PDCMS function requires a longer distance for a deceleration when the brake is not yet operated in order to reduce the impact on the pedestrian.

Also, the PDCMS function is not operated when the distance between the pedestrian and the vehicle is too long or the pedestrian and the vehicle are already in contact with each other.

FIG. 7 is a diagram illustrating a background example of the mapping table for operating the PDCMS function not covered by the claims.

The determination module 410 uses the mapping table to determine the risk of collision of the pedestrian with the vehicle, and furthermore, whether the PDCMS function is operated.

Referring to FIG. 7, the determination module 410 determines the operation of the PDCMS function based on an initial speed at a boundary of a driving lane on which the pedestrian is moving and an initial speed of the vehicle.

Specifically, if an absolute value of the initial speed at the boundary of the driving lane on which the pedestrian is moving and the initial speed of the vehicle are in an area in which the PDCMS function is essentially operated at the time of determining whether the PDCMS function is operated, the determination module 410 determines that the PDCMS function is operated. The operation possible area means the area in which the Vmin or the Vmax may be adjusted according to the selection of the manufacturer.

For example, if the speed of the vehicle falls below 8.4 m / s (30 km / h) as the Vmin or rises above 16.6 m / s (60 km / h) as the Vmax, then the determination module 410 may determine that the PDCMS is in the deactivation state and thus the PDCMS function is not operated.

Further, when the initial speed of the vehicle is between the Vmin and the Vmax and the absolute value of the initial speed at the boundary of the driving lane on which the pedestrian is moving is between 0.83 m / s and 1.5 m / s, the determination module 410 may determine that the PDCMS function is operated.

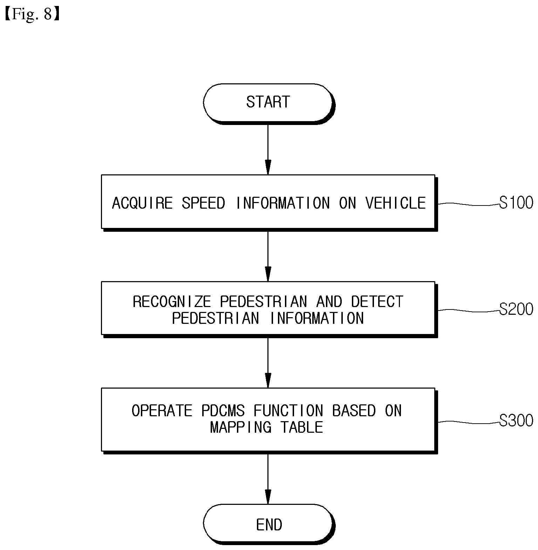

FIG. 8 is a flow chart illustrating a flow of a method for activating a PDCMS function according to an embodiment of the present invention.

Referring to FIG. 8, a method of operating a pedestrian detection and collision mitigation system (PDCMS) function of an vehicle according to an embodiment of the present invention includes detecting vehicle information including speed information on the vehicle (S100), detecting pedestrian information including a presence of a pedestrian on a driving lane of the vehicle and a distance and a relative speed between the pedestrian and the vehicle when the speed of the vehicle is equal to or greater than a set speed (S200), and operating the PDCMS function based on the mapping table using the vehicle information and the pedestrian information (S300).

In the detecting of the vehicle information including the speed information on the vehicle (S100), the number of RPMs of the vehicle wheel is measured based on the vehicle engine and the driving speed of the vehicle is calculated based on the known circumference of the wheel and the measured number of RPM and time. Further, it is possible to ascertain whether the brake pedal is operated.

In the detecting of the pedestrian information including the presence of the pedestrian on the driving lane of the vehicle and the distance and the relative speed between the pedestrian and the vehicle when the speed of the vehicle is equal to or greater than the set speed (S200), characteristics of obstacles detected in front of the vehicle may be extracted to identify objects and various objects such as vehicles on a roadside as well as pedestrians may be detected. Specifically, even parts forming the pedestrian as well as the overall appearance of the pedestrian may be detected, and thus the pedestrian may be detected even when only a part of the pedestrian covered by various objects such as vehicles on a roadside is detected. Further, for the detected pedestrian, the distance between the pedestrian and the vehicle and the moving speed of the pedestrian may be detected.

In the operating of the PDCMS function based on the mapping table using the vehicle information and the pedestrian information (S300), it is determined whether to operate the PDCMS function of the vehicle based on the acquired vehicle information and the detected pedestrian information. Specifically, it is determined whether the conditions that the PDCMS function may be operated are satisfied based on the combination of the pedestrian state and the vehicle state. That is, if it is determined that an obstacle is a pedestrian, the risk of collision of the pedestrian with the vehicle is determined using the current position of the pedestrian, the current position of the vehicle, and the speed information on the vehicle.

Further, in the operating of the PDCMS function based on the mapping table using the vehicle information and the pedestrian information (S300), the PDCMS function of the vehicle is operated if it is determined that the pedestrian state and the vehicle state satisfy the conditions that the PDCMS function starts. The PDCMS function includes warning the driver of the collision of the pedestrian with the vehicle, operating the active hood, or operating the brake without the operation of the driver.

According to the embodiment of the present invention, the apparatus for activating a PDCMS of a vehicle may warn the driver of the pedestrian collision and automatically activate the brake to lower the speed of the vehicle and protect the pedestrian when there is the possibility of collision.

The foregoing includes examples of one or more embodiments. Of course, all possible combinations of components or methods for the purpose of describing the embodiments described above are not described, but those skilled in the art may recognize that many combinations and substitutions of various embodiments are possible, as far as within the scope of the appended claims.

## Claims

1. An apparatus (100) for activating a pedestrian detection and collision mitigation system (PDCMS) of a vehicle (700), comprising:
an engine management system (200), "EMS", for acquiring speed information on the vehicle (700) in real time;
an image collecting device (300) for recognizing a pedestrian (600) positioned within a driving lane of the vehicle (700) and detecting information on a relative speed and a distance between the pedestrian (600) and the vehicle (700), when a speed of the vehicle (700) is equal to or greater than a set first speed;
an electronic control unit (400), "ECU", for activating a PDCMS function based on a mapping table using the speed information on the vehicle (700) and the information on a motion or the distance between the pedestrian (600) and the vehicle (700), wherein a PDCMS activation state, in which the PDCMS function can be operated, is established when the speed of the vehicle (700) is equal to or greater than a predetermined value Vmin and equal to or less than a predetermined value Vmax; and
a warning device (500) for informing a driver of a collision of the pedestrian (600) with the vehicle (700) by a control of the ECU (400),
wherein the PDCMS function includes an activation of an operation of an active hood, an activation of an operation of the warning device (500), and an activation of an operation of a brake regardless of whether the driver operates the brake,
wherein the activation of the operation of the brake regardless of whether the driver operates the brake is performed so that the speed of the vehicle (700) is reduced to at least a predetermined speed or more from a time point when the operation of the brake is activated to a time point when the collision of the pedestrian (600) with the vehicle (700) occurs,
wherein the mapping table is a data table comprising distance values between the pedestrian (600) and the vehicle (700) for determining the activation of the PDCMS function based on the distance between the pedestrian (600) and the vehicle (700) and whether the brake is operated by the driver, wherein in the mapping table, the distance between the vehicle (700) and the pedestrian (600) for determining the activation of the PDCMS function is longer when the brake is not yet operated by the driver than when the brake is already operated by the driver.

2. The apparatus (100) of claim 1, wherein the EMS (200) measures revolutions per minute (RPM) of a wheel of the vehicle (700) and acquires the speed information on the vehicle (700) based on a known circumference of the wheel and the measured RPM of the wheel.

3. The apparatus (100) of any one of claims 1 to 2 , wherein the image collecting device (300) starts to scan an outer portion of a lane nearest to the vehicle (700) to determine whether there is the pedestrian (600) on the driving lane of the vehicle (700).

4. The apparatus (100) of any one of claims 1 to 3, wherein the ECU (400) informs the driver that the PDCMS function is in an available state.

5. The apparatus (100) of any one of claims 1 to 4 , wherein the ECU (400) permits the driver to operate the brake for a maximum possible deceleration even after starting the activation of the operation of the brake.

6. The apparatus (100) of any one of claims 1 to 5, wherein the warning device (500) includes a display visually informing the collision of the pedestrian (600) with the vehicle (700) or a speaker audibly informing the collision of the pedestrian (600) with the vehicle (700).

7. The apparatus (100) of any one of claims 1 to 6 , wherein the PDCMS function further includes an operation of a rear brake lamp.

8. The apparatus (100) of any one of claims 1 to 7 , wherein the PDCMS function may further include an operation of an electrical stability control (ESC).

9. A method for activating a pedestrian detection and collision mitigation system (PDCMS) of a vehicle (700), comprising:
detecting vehicle information including speed information on the vehicle (700);
detecting pedestrian information including a presence of a pedestrian (600) on a driving lane of the vehicle (700) and a distance and a relative speed between the pedestrian (600) and the vehicle (700) when the speed of the vehicle (700) is equal to or greater than a set speed; and
activating a PDCMS function based on a mapping table using the vehicle information and the pedestrian information, wherein a PDCMS activation state, in which the PDCMS function can be operated, is established when the speed of the vehicle (700) is equal to or greater than a predetermined value Vmin and equal to or less than a predetermined value Vmax,
wherein the PDCMS function includes an activation of an operation of an active hood, an activation of an operation of a warning device (500) operating to inform a driver of a collision of the pedestrian (600) with the vehicle (700) and an activation of an operation of a brake regardless of whether the driver operates the brake,
wherein the activation of the operation of the brake regardless of whether the driver operates the brake is performed so that the speed of the vehicle (700) is reduced to at least a predetermined speed or more from a time point when the operation of the brake is activated to a time point when the collision of the pedestrian (600) with the vehicle (700) occurs,
wherein the mapping table is a data table comprising distance values between the pedestrian (600) and the vehicle (700) for determining the activation of the PDCMS function based on the distance between the pedestrian (600) and the vehicle (700) and whether the brake is operated by the driver, wherein in the mapping table, the distance between the vehicle (700) and the pedestrian (600) for determining the activation of the PDCMS function is longer when the brake is not yet operated by the driver than when the brake is already operated by the driver.

## Patentansprüche

1. Vorrichtung (100) zum Aktivieren eines Fußgängerdetektions- und Kollisionsminderungssystems (PDCMS) eines Fahrzeugs (700), aufweisend:
ein Verbrennungsmotorverwaltungssystem (200), "EMS", zum Erlangen von Geschwindigkeitsinformationen über das Fahrzeug (700) in Echtzeit,
eine Bildsammeivorrichtung (300) zum Erkennen eines Fußgängers (600), der sich innerhalb einer Fahrspur des Fahrzeugs (700) befindet, und zum Detektieren von Informationen über eine relative Geschwindigkeit und einen Abstand zwischen dem Fußgänger (600) und dem Fahrzeug (700), wenn eine Geschwindigkeit des Fahrzeugs (700) größer oder gleich einer festgesetzten ersten Geschwindigkeit ist,
eine elektronische Steuereinheit (400), "ECU", zum Aktivieren einer PDCMS-Funktion basierend auf einer Abbildungstabelle mittels der Geschwindigkeitsinformationen über das Fahrzeug (700) und der Informationen über eine Bewegung oder den Abstand zwischen dem Fußgänger (600) und dem Fahrzeug (700), wobei ein PDCMS-Aktivierungszustand, in dem die PDCMS-Funktion betätigt werden kann, hergestellt wird, wenn die Geschwindigkeit des Fahrzeugs (700) größer oder gleich einem vorbestimmten Wert Vmin und kleiner oder gleich einem vorbestimmten Wert Vmax ist, und
eine Warnvorrichtung (500) zum Informieren eines Fahrers über eine Kollision des Fußgängers (600) mit dem Fahrzeug (700) durch eine Steuerung der ECU (400),
wobei die PDCMS-Funktion eine Aktivierung einer Betätigung einer aktiven Motorhaube, eine Aktivierung einer Betätigung der Warnvorrichtung (500) und eine Aktivierung einer Betätigung einer Bremse unabhängig davon, ob der Fahrer die Bremse betätigt, aufweist,
wobei die Aktivierung der Betätigung der Bremse unabhängig davon, ob der Fahrer die Bremse betätigt, so durchgeführt wird, dass die Geschwindigkeit des Fahrzeugs (700) ab einem Zeitpunkt, zu dem die Betätigung der Bremse aktiviert wird, bis zu einem Zeitpunkt, zu dem die Kollision des Fußgängers (600) mit dem Fahrzeug (700) auftritt, auf mindestens eine vorbestimmte Geschwindigkeit oder mehr reduziert wird,
wobei die Abbildungstabelle eine Datentabelle ist, die Abstandswerte zwischen dem Fußgänger (600) und dem Fahrzeug (700) aufweist, zum Bestimmen der Aktivierung der PDCMS-Funktion basierend auf dem Abstand zwischen dem Fußgänger (600) und dem Fahrzeug (700) und darauf, ob die Bremse vom Fahrer betätigt wird, wobei in der Abbildungstabelle der Abstand zwischen dem Fahrzeug (700) und dem Fußgänger (600) zum Bestimmen der Aktivierung der PDCMS-Funktion länger ist, wenn die Bremse noch nicht vom Fahrer betätigt wird, als wenn die Bremse bereits vom Fahrer betätigt wird.

2. Vorrichtung (100) gemäß Anspruch 1, wobei das EMS (200) Umdrehungen pro Minute (RPM) eines Rades des Fahrzeugs (700) misst und die Geschwindigkeitsinformationen über das Fahrzeug (700) basierend auf einem bekannten Radumfang und den gemessenen Umdrehungen pro Minute des Rades erlangt.

3. Vorrichtung (100) gemäß irgendeinem der Ansprüche 1 bis 2, wobei die Bildsammelvorrichtung (300) beginnt, einen äußeren Abschnitt einer Fahrspur am nächsten beim Fahrzeug (700) abzutasten, um zu ermitteln, ob sich der Fußgänger (600) auf der Fahrspur des Fahrzeugs (700) befindet.

4. Vorrichtung (100) gemäß irgendeinem der Ansprüche 1 bis 3, wobei die ECU (400) dem Fahrer mitteilt, dass die PDCMS-Funktion in einem verfügbaren Zustand ist.

5. Vorrichtung (100) gemäß irgendeinem der Ansprüche 1 bis 4, wobei die ECU (400) dem Fahrer erlaubt, die Bremse für eine maximal mögliche Abbremsung zu betätigen, auch nachdem die Aktivierung der Betätigung der Bremse begonnen hat.

6. Vorrichtung (100) gemäß irgendeinem der Ansprüche 1 bis 5, wobei die Warnvorrichtung (500) aufweist: eine Anzeige, die visuell über die Kollision des Fußgängers (600) mit dem Fahrzeug (700) informiert, oder einen Lautsprecher, der akustisch über die Kollision des Fußgängers (600) mit dem Fahrzeug (700) informiert.

7. Vorrichtung (100) gemäß irgendeinem der Ansprüche 1 bis 6, wobei die PDCMS-Funktion ferner eine Betätigung einer hinteren Bremsleuchte aufweist.

8. Vorrichtung (100) gemäß irgendeinem der Ansprüche 1 bis 7, wobei die PDCMS-Funktion ferner eine Betätigung einer elektrischen Stabilitätskontrolle (ESC) aufweisen kann.

9. Verfahren zum Aktivieren eines Fußgängerdetektions-und Kollisionsminderungssystems (PDCMS) eines Fahrzeugs (700), aufweisend:
Detektieren von Fahrzeuginformationen, die Geschwindigkeitsinformationen über das Fahrzeug (700) aufweisen,
Detektieren von Fußgängerinformationen, die eine Anwesenheit eines Fußgängers (600) auf einer Fahrspur des Fahrzeugs (700) und einen Abstand und eine relative Geschwindigkeit zwischen dem Fußgänger (600) und dem Fahrzeug (700) aufweisen, wenn die Geschwindigkeit des Fahrzeugs (700) größer oder gleich einer festgesetzten Geschwindigkeit ist, und
Aktivieren einer PDCMS-Funktion basierend auf einer Abbildungstabelle mittels der Fahrzeuginformationen und der Fußgängerinformationen, wobei ein PDCMS-Aktivierungszustand, in dem die PDCMS-Funktion betätigt werden kann, hergestellt wird, wenn die Geschwindigkeit des Fahrzeugs (700) größer oder gleich einem vorbestimmten Wert Vmin und kleiner oder gleich einem vorbestimmten Wert Vmax ist,
wobei die PDCMS-Funktion eine Aktivierung einer Betätigung einer aktiven Motorhaube, eine Aktivierung einer Betätigung einer Warnvorrichtung (500), die funktioniert, um einen Fahrer über eine Kollision des Fußgängers (600) mit dem Fahrzeug (700) zu informieren, und eine Aktivierung einer Betätigung einer Bremse unabhängig davon, ob der Fahrer die Bremse betätigt, aufweist,
wobei die Aktivierung der Betätigung der Bremse unabhängig davon, ob der Fahrer die Bremse betätigt, so durchgeführt wird, dass die Geschwindigkeit des Fahrzeugs (700) ab einem Zeitpunkt, zu dem die Betätigung der Bremse aktiviert wird, bis zu einem Zeitpunkt, zu dem die Kollision des Fußgängers (600) mit dem Fahrzeug (700) stattfindet, auf mindestens eine vorbestimmte Geschwindigkeit oder mehr reduziert wird,
wobei die Abbildungstabelle eine Datentabelle ist, die Abstandswerte zwischen dem Fußgänger (600) und dem Fahrzeug (700) aufweist, zum Bestimmen der Aktivierung der PDCMS-Funktion basierend auf dem Abstand zwischen dem Fußgänger (600) und dem Fahrzeug (700) und darauf, ob die Bremse von dem Fahrer betätigt wird, wobei in der Abbildungstabelle der Abstand zwischen dem Fahrzeug (700) und dem Fußgänger (600) zum Bestimmen der Aktivierung der PDCMS-Funktion länger ist, wenn die Bremse vom Fahrer noch nicht betätigt wird, als wenn die Bremse vom Fahrer bereits betätigt wird.

## Revendications

1. Appareil (100) pour activer un système de détection de piéton et d'atténuation de collision (PDCMS) d'un véhicule (700), comprenant :
un système de gestion de moteur (200), « EMS », pour acquérir des informations de vitesse sur le véhicule (700) en temps réel ;
un dispositif de collecte d'images (300) pour reconnaître un piéton (600) positionné dans une voie de conduite du véhicule (700) et détecter des informations sur une vitesse relative et une distance entre le piéton (600) et le véhicule (700), lorsqu'une vitesse du véhicule (700) est supérieure ou égale à une première vitesse fixée ;
une unité de commande électronique (400), « ECU », pour activer une fonction PDCMS sur la base d'une table de mappage utilisant les informations de vitesse sur le véhicule (700) et les informations sur un mouvement ou la distance entre le piéton (600) et le véhicule (700), où un état d'activation PDCMS, dans lequel la fonction PDCMS peut être actionnée, est établi lorsque la vitesse du véhicule (700) est supérieure ou égale à une valeur prédéterminée Vmin et inférieure ou égale à une valeur prédéterminée Vmax ; et
un dispositif d'avertissement (500) pour informer un conducteur d'une collision du piéton (600) avec le véhicule (700) par une commande de l'ECU (400),
dans lequel la fonction PDCMS comprend une activation d'un actionnement d'un capot actif, une activation d'un actionnement du dispositif d'avertissement (500), et une activation d'un actionnement d'un frein que le conducteur actionne ou non le frein,
dans lequel l'activation de l'actionnement du frein, que le conducteur actionne ou non le frein, est effectuée de sorte que la vitesse du véhicule (700) est réduite à au moins une vitesse prédéterminée ou plus à partir d'un moment où l'actionnement du frein est activé jusqu'à un moment où la collision du piéton (600) avec le véhicule (700) se produit,
dans lequel la table de mappage est une table de données comprenant des valeurs de distance entre le piéton (600) et le véhicule (700) pour déterminer l'activation de la fonction PDCMS sur la base de la distance entre le piéton (600) et le véhicule (700) et si le frein est actionné par le conducteur, dans lequel dans la table de mappage, la distance entre le véhicule (700) et le piéton (600) pour déterminer l'activation de la fonction PDCMS est plus longue lorsque le frein n'est pas encore actionné par le conducteur que lorsque le frein est déjà actionné par le conducteur.

2. Appareil (100) selon la revendication 1, dans lequel l'EMS (200) mesure les tours par minute (RPM) d'une roue du véhicule (700) et acquiert les informations de vitesse sur le véhicule (700) sur la base d'une circonférence connue de la roue et du RPM mesuré de la roue.

3. Appareil (100) selon l'une quelconque des revendications 1 à 2, dans lequel le dispositif de collecte d'images (300) commence à balayer une partie extérieure d'une voie la plus proche du véhicule (700) pour déterminer s'il y a le piéton (600) sur la voie de conduite du véhicule (700).

4. Appareil (100) selon l'une quelconque des revendications 1 à 3, dans lequel l'ECU (400) informe le conducteur que la fonction PDCMS est dans un état disponible.

5. Appareil (100) selon l'une quelconque des revendications 1 à 4, dans lequel l'ECU (400) permet au conducteur d'actionner le frein pour une décélération maximale possible même après le démarrage de l'activation de l'actionnement du frein.

6. Appareil (100) selon l'une quelconque des revendications 1 à 5, dans lequel le dispositif d'avertissement (500) comprend un afficheur informant visuellement de la collision du piéton (600) avec le véhicule (700) ou un haut-parleur informant de manière audible de la collision du piéton (600) avec le véhicule (700).

7. Appareil (100) selon l'une quelconque des revendications 1 à 6, dans lequel la fonction PDCMS comprend en outre un actionnement d'un feu de freinage arrière.

8. Appareil (100) selon l'une quelconque des revendications 1 à 7, dans lequel la fonction PDCMS peut en outre comprendre un actionnement d'un contrôle de stabilité électrique (ESC).

9. Procédé d'activation d'un système de détection de piéton et d'atténuation de collision (PDCMS) d'un véhicule (700), comprenant :
la détection d'informations de véhicule, comprenant des informations de vitesse sur le véhicule (700) ;
la détection d'informations de piéton, comprenant une présence d'un piéton (600) sur une voie de conduite du véhicule (700) et une distance et une vitesse relative entre le piéton (600) et le véhicule (700) lorsque la vitesse du véhicule (700) est supérieure ou égale à une vitesse fixée ; et
l'activation d'une fonction PDCMS sur la base d'une table de mappage utilisant les informations de véhicule et les informations de piéton, où un état d'activation PDCMS, dans lequel la fonction PDCMS peut être actionnée, est établi lorsque la vitesse du véhicule (700) est supérieure ou égale à une valeur prédéterminée Vmin et inférieure ou égale à une valeur prédéterminée Vmax,
dans lequel la fonction PDCMS comprend une activation d'un actionnement d'un capot actif, une activation d'un actionnement d'un dispositif d'avertissement (500) fonctionnant pour informer un conducteur d'une collision du piéton (600) avec le véhicule (700) et une activation d'un actionnement d'un frein que le conducteur actionne ou non le frein,
dans lequel l'activation de l'actionnement du frein, que le conducteur actionne ou non le frein, est effectuée de sorte que la vitesse du véhicule (700) est réduite à au moins une vitesse prédéterminée ou plus à partir d'un moment où l'actionnement du frein est activé jusqu'à un moment où la collision du piéton (600) avec le véhicule (700) se produit,
dans lequel la table de mappage est une table de données comprenant des valeurs de distance entre le piéton (600) et le véhicule (700) pour déterminer l'activation de la fonction PDCMS sur la base de la distance entre le piéton (600) et le véhicule (700) et si le frein est actionné par le conducteur, dans lequel dans la table de mappage, la distance entre le véhicule (700) et le piéton (600) pour déterminer l'activation de la fonction PDCMS est plus longue lorsque le frein n'est pas encore actionné par le conducteur que lorsque le frein est déjà actionné par le conducteur.
